# EUROPEAN PATENT APPLICATION

(11) **EP 4 796 902 A1**
(43) Date of publication of application: **26.08.2026**
(21) Application number: 25160033.4
(22) Date of filing: 25.02.2025
(51) Int. Cl.: G01H 9/00, G01D 5/353

(54) **AN ACOUSTIC SENSING SYSTEM, A METHOD AND A COMPUTER PROGRAM PRODUCT**

(71) Applicant: Nederlandse Organisatie voor toegepast- natuurwetenschappelijk onderzoek TNO, 2595 DA 's-Gravenhage (NL)
(72) Inventor: CHENG, Lun-Kai, 2595 DA 's-Gravenhage (NL); DE JONG, Willem, 2595 DA 's-Gravenhage (NL); VAN NEER, Paul Louis Maria Joseph, 2595 DA 's-Gravenhage (NL); QUESSON, Benoit André Jacques, 2595 DA 's-Gravenhage (NL)
(74) Representative: V.O.

(57) **Abstract**

The invention relates to an acoustic sensing system, comprising a sensing fiber [2] located in an environment [3], an interrogator module [4] connected to the sensing fiber for interrogating the sensing fiber using an incident light [I], and a detection module [5',5''] connected to the sensing fiber for detecting light reflected by the sensing fiber illuminated by the incident light. The system further comprises a high power optical pulse light source [7] connected to the sensing fiber for injecting a high power optical pulse therein. The sensing fiber is provided with an absorber structure [8] comprising material converting optical power from the high power optical pulse into a thermal expansion of the absorber structure resulting in a guided or interface acoustic wave [G] propagating along the sensing fiber towards the detection module. Further, the detection module is arranged for detecting light reflected by the sensing fiber affected by the guided or interface acoustic wave as a response to the high power optical pulse

## Description

The present invention relates to an acoustic sensing system such as a distributed acoustic sensing system.

Distributed acoustic sensing DAS is based on a principle of applying consecutive pulse-echo optical measurements to follow propagation of pressure, acoustic, elastic, guided or mechanical waves over time at different or distributed locations surrounding locations along a sensing fiber, e.g. for a purpose of non-destructively testing of large structures. Scattering centres in the sensing fiber generate respective backscattered light echo-pulses. A spatial shift in a scattering centre caused by mechanical vibration induces a corresponding phase in the echo-pulse of said scattering centre thereby facilitating an offset optical measurement of waves occurring near a remote section of the sensing fiber. DAS systems can be used for a wide range of applications including seismics, traffics, vibration of construction etc.

Generally, an acoustic sensing system includes a sensing fiber located in an environment such as a bridge, an industrial structure, an offshore structure or a sea bed. Further, the acoustic sensing system includes an interrogator module connected to the sensing fiber for interrogating the sensing fiber using an incident light, as well as a detection module connected to the fiber optic for detecting light reflected by the sensing fiber illuminated by the incident light. The detection module may be provided with an interferometer measurement system, e.g. including a two beams interferometer e.g. Michelson or Mach-Zehnder Interferometer.

It is noted that within the present disclosure, the word "acoustic" or the words "acoustical energy" or "acoustic waves" should be understood to relate to a whole spectrum of wave types including pressure, acoustic, bulk, elastic, guided, interface or mechanical waves.

DAS fiber optic sensing technology is getting increasing interest from seismic, infrastructure structural health monitoring, traffic control, security, defense and other applications. One of the key advantages of DAS is that it essentially is a continuous sensor array. However, if a sensing fiber is inserted in an environment such as a pipe wall, in the ground, in a cable or a combination of similar situations, it is unknown what the mechanical boundary conditions are. Generally, the fiber optical sensitivity is constant along its length, but the mechanical coupling, or in other words the transfer of acoustical energy from the surrounding to the fiber core, will vary. As an example, if a sensing fiber is deployed in the sea bed, cavities between soil and the sensing fiber may form which could be filled with a liquid.

In other words, a practical issue of a DAS system is the lack of information about the mechanical coupling between the environment measurand, such as pressure, seismic waves etc, on one hand and the strain measured by the DAS sensing fiber on the other hand, due to the packaging of the fiber and the installation procedure and/or material used and the properties of the surrounding materials. This results in a large variation in the strain transfer function along the sensing fiber which can affect the DAS measurement data quality and hence the interpretation significantly. Quantitative approaches to identify or to reduce the above issue include applying artificially additional gain factors for locations which appear to have a weak response, or varying the spatial resolution to identify locations with different response. However, no fundamental solution to meet the unknown, inconsistent mechanical coupling between the environment and the sensing fiber is known.

It is an object of the invention to provide an improved acoustic sensing system. It is a further object to provide an acoustic sensing system addressing the lack of information about the mechanical coupling between the environment and the sensing fiber.

Thereto, according to an aspect of the invention, an acoustic sensing system is provided, comprising a sensing fiber located in an environment, an interrogator module connected to the sensing fiber for interrogating the sensing fiber using an incident light, a detection module connected to the sensing fiber for detecting light reflected by the sensing fiber illuminated by the incident light, the system further comprising a high power optical pulse light source connected to the sensing fiber for injecting a high power optical pulse therein, wherein the sensing fiber is provided with an absorber structure comprising material converting optical power from the high power optical pulse into a thermal expansion of the absorber structure resulting in a guided or interface acoustic wave propagating along the sensing fiber towards the detection module, and wherein the detection module is arranged for detecting light reflected by the sensing fiber affected by the guided or interface acoustic wave as a response to the high power optical pulse.

By applying a high power optical pulse to generate a thermal expansion resulting in a guided or interface acoustic wave propagating along the sensing fiber towards the detection module, characteristics of the acoustic wave can be measured for the evaluation of acoustic wave energy that locally leaks and/or refracts into the surrounding medium. Then, a local mechanical coupling between the environment and the sensing fiber can be determined.

Generally, the absorber generated acoustic wave propagates along the sensing fiber and changes the reflected light, such as a property of the Rayleigh scattering, that is detected by the detection module. The detection module may be arranged to measure a single or a multiple number of properties of the guided or interface acoustic wave, such as speed and/or attenuation etc, and to deduces, from the measured properties or changes of said measured properties, environmental material parameter variation or variations, such as a local stiffness and/or a local Young's modulus.

It is noted that the expression "light reflected by the sensing fiber" is to be understood as light that has been reflected somewhere in and along the sensing fiber where the generated acoustic wave propagates.

By generating and detecting acoustic waves in a sensing optical fiber a mechanical interaction between the optical fiber and the environment along the optical fiber can be measured. The acoustic wave is generated by absorbing a short optical pulse by an absorbing material and converted to a quick thermal expansion of the material. The properties of the wave depends on both the properties of the material and the optical pulse. The absorbing material may be attached to the sensing fiber to transfer the expansion to an acoustic wave guided by the sensing fiber or traveling along a fiber interface. The acoustic wave generating strain in the fiber is detected by proper fiber optic sensing technology e.g. a Distributed Acoustic Sensing DAS in order to enable the measurement of local mechanical interaction or coupling or changes therein between the optical fiber and the surrounding material. This can be e.g. used to calibrate the response of the DAS sensing fiber and/or to monitor changes in mechanical interaction or coupling over time.

The acoustic wave may propagate e.g. as a guided acoustic wave, such as a Lamb wave, or as an interface acoustic wave, such as a Stonely wave, wherein the sensing fiber is typically embedded in a solid, a Scholte wave, wherein the sensing fiber is typically embedded in a liquid, or a Rayleigh wave, wherein the sensing fiber is typically embedded in a gas. The frequency of the wave may be high enough that any interaction of interface waves from one side of the fiber with interface waves from the other side of the fiber is negligible or do not feel each other.

The acoustic sensing system may be implemented as a distributed acoustic sensing system, wherein the detection module is arranged for detecting properties of optical Rayleigh type backscattered light caused by a scattering section in the sensing fiber. Alternatively, the detection module may be arranged for detecting properties of other light types, such as Brillouin or Raman backscattered light.

Advantageously, the absorber structure is provided at a distal end and/or at an intermediate section of the sensing fiber, thus generating the acoustic wave near or in the sensing fiber.

The interrogator module may be arranged for operating at a first wavelength, while the high power optical pulse source may be arranged for operating at a second wavelength different from the first wavelength. Then, the optical measurement process can be performed and optimized separate from the process of generating the acoustic wave with the high power optical pulse. Further, the high power optical pulse source may be arranged for operating at a multiple number of wavelengths, e.g. for generating respective acoustic waves at respective locations depending on a frequency characteristic of respective absorber structures.

An absorber structure may e.g. be formed as a fiber bragg grating FBG that is located in a tilted orientation relative to a longitudinal axis of the sensing fiber, or may at least partly be formed by a cladding of the sensing fiber, by the environment where the sensing fiber is located and/or by a local core offset of the sensing fiber to direct high power pulsed light to the absorber.

The high power optical pulse may be injected into the sensing fiber. Alternatively, the acoustic sensing system may include a separate fiber guiding a high power optical pulse generated by the high power optical pulse source towards the absorber structure. The sensing fiber and the separate fiber may be embedded in a common cladding, or may each have their own cladding.

In a preferred embodiment, the system comprises a processor arranged for deducing, based on the guided or interface acoustic wave response detected by the detection module via the reflected light, an environmental spatial dependent material parameter, such as a local stiffness and/or a local Young's modulus, interacted with the guided or interface acoustic wave propagation. In operation, the detection module detects, via the received backscattered light response, characteristics of the guided or interface acoustic wave, such as local attenuation and/or speed of the acoustic wave. Then, the processor deducts from these wave characteristics an environmental spatial dependent material parameter or parameters, such as a local stiffness, Young's modulus or mass density parameter, as a function along the sensing fiber. Inherently, the environmental spatial dependent material parameter or parameters interact with the generated acoustic wave.

Generally, the detection module may be arranged for measuring or detecting in the optical domain, while, on the other hand, information of the acoustic wave generated by the absorber structure is deduced, by the processor, from data of the optical measurement.

Then, information can be provided about the mechanical coupling along the sensing fiber which can be used to correct the measurand to fiber strain scale factor. This results in improvement of the measurand data to achieve more accurate and detail information of the measurement or experiment.

In a process of detecting the guided or interface acoustic wave response, properties of the guided or interface acoustic wave are measured via the light reflected, the properties e.g. including wave speed and attenuation.

Further, a guided or interface wave model may be evaluated to calculate a simulated response of the guided or interface acoustic wave, based on an estimated environmental spatial dependent material parameter.

Then, according to an aspect of the invention, the response detected by the detector can be calibrated by interrelating the environmental spatial dependent material parameter deduced from the detected response to the estimated environmental spatial dependent material parameter of the guided or interface wave model.

The results can thus be used for the calibration of a local fiber response in a DAS measurement system to improve the DAS signal processing and the quality of the measurement results.

According to a further aspect of the invention, a change in the environmental spatial dependent material parameter value can be determined by repeatedly performing the steps of injecting a high power optical pulse, detecting the guided or interface acoustic wave response, deducing an environmental local dependent material parameter, based on the detected response, and by comparing the deduced environmental spatial dependent material parameter over time.

A change of the mechanical coupling along the fiber in time can be used to identify local changes of mechanical properties of the surrounded medium for structural health monitoring SHM applications.

The invention also relates to a method of using an acoustic sensing system.

Further, the invention relates to a computer program product for using a processor to perform a method of operating an acoustic sensing system. A computer program product may comprise a set of computer executable instructions stored on a data carrier, such as but not limited to a flash memory, a CD or a DVD. The set of computer executable instructions, which allow a programmable computer to carry out the method as defined above, may also be available for downloading from a remote server, for example via the Internet.

The computer program product comprises computer readable code for causing a processor to perform at least one step of the method according to the invention.

Other advantageous embodiments according to the invention are described in the following claims.

It should be noted that the technical features described above or below may each on its own be embodied in a system or method, i.e. isolated from the context in which it is described, separate from other features, or in combination with only a number of the other features described in the context in which it is disclosed. Each of these features may further be combined with any other feature disclosed, in any combination.

The invention will be further elucidated on the basis of exemplary embodiments which are represented in the drawings. The exemplary embodiments are given by way of non-limitative illustration of the invention. In the drawings:
Fig. 1 shows a schematic view of an acoustic sensing system according to a first embodiment of the invention;
Fig. 2 shows a schematic view of an acoustic sensing system according to a second embodiment of the invention;
Fig. 3 shows a schematic view of an acoustic sensing system according to a third embodiment of the invention;
Fig. 4 shows a schematic view of an acoustic sensing system according to a fourth embodiment of the invention, and
Fig. 5 shows a flow chart of a method according to the invention.

In the figures identical or corresponding parts are represented with the same reference numerals. The drawings are only schematic representations of embodiments of the invention, which are given by manner of non-limited examples.

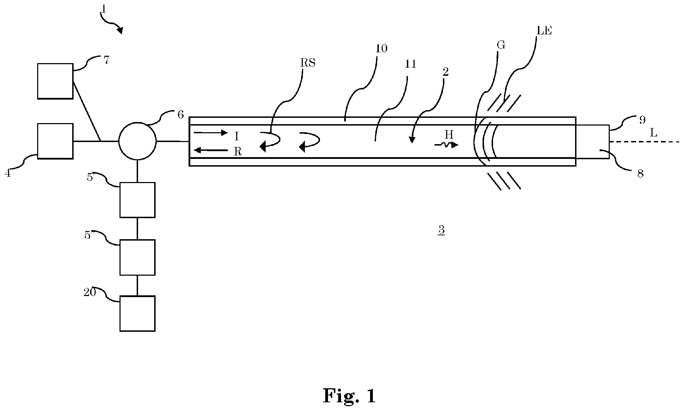

Figure 1 shows a schematic view of an acoustic sensing system 1 according to a first embodiment of the invention. The system 1 is implemented as a distributed acoustic sensing DAS system 1 and includes a sensing fiber 2, being a single mode fiber optic, located in an environment 3. Further, the system 1 includes an interrogator module 4 connected to the sensing fiber 2 for interrogating the sensing fiber 2 using an incident light I. Also, the system 1 includes a detection module 5', 5" connected to the sensing fiber 2 for detecting reflected light R reflected by the sensing fiber 2 illuminated by the incident light I. In the shown embodiment, the interrogator module 4 and the detection module 5', 5" are connected to the sensing fiber 2 via an optical circulator 6.

The system 1 further includes a high power optical pulse light source 7 connected to the sensing fiber 2, e.g. using a splitter, for injecting a high power optical pulse H or strong optical pulse therein.

As shown, the sensing fiber 2 is provided, at its distal end 9, with an absorber structure 8 comprising material converting optical power from the high power optical pulse H into a thermal expansion of the absorber structure 8 resulting in a guided acoustic wave G propagating along the sensing fiber 2 back towards the detection module 5', 5". The detection module is arranged for detecting reflected light R reflected by the sensing fiber 2 affected by the guided acoustic wave G as a response to the high power optical pulse H.

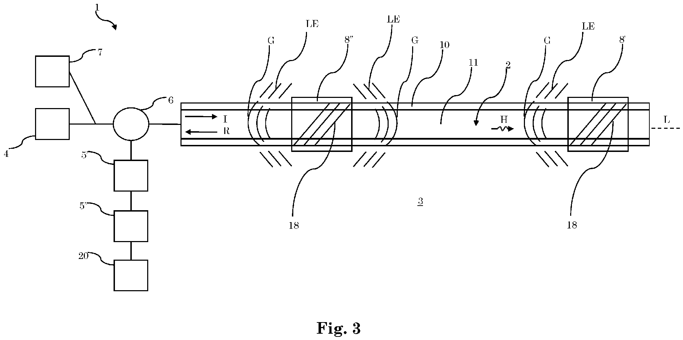

It is noted that in another embodiment, the generated acoustic wave G may propagate as an interface wave. It is further noted that the absorber structure 8 may be attached to the sensing fiber 2 at a distal end 9 or other respective locations of the sensing fiber 2 as e.g. shown in Fig. 3.

Upon traveling along the sensing fiber 2, a portion of the optical energy from the high power optical pulse H may be reflected through Rayleigh scattering RS due to scatterers that exits everywhere at random locations along the sensing fiber 2. A large portion of the high power optical pulse H arrives at the absorber structure or optically absorbing medium 8, and is substantially absorbed therein. Preferably the absorber structure 8 is designed such that, in practice, all or almost all high power optical pulse H is absorbed counteracting any reflection by the absorber structure 8. Reflection can be avoided e.g. by cutting the the fiber 2 where the absorber structure 8 has been attached, e.g. using gold particles or carbon black particles, under an angle deviating from 90 degrees relative to a longitudinal axis L of the sensing fiber 2, e.g. circa 45 degrees relative to the longitudinal axis L.

The light absorbed in the absorber structure 8 is converted into heat, such that the absorber structure heats up, expands and generates a guided acoustic wave or stress wave G travelling back along the sensing fiber towards the detector 5', 5". During propagation, the guided acoustic wave G may leak energy LE into the surrounding medium or environment 3 due to refraction. A rate of refraction may be influenced by selecting a sensing fiber 2 having a core 11 and a specific cladding 10 circumventing said fiber core 11.

The guided acoustic wave G may be generated as a longitudinal mode or modes excitated axi-symmetrically, as a compressional wave or as an evanescent wave which only may exist if the mechanical properties of a coating or cladding 10 are sufficiently different compared to that of the core 11.

Advantageously, a part of the generated guided acoustic wave G travelling back along the sensing fiber 2 has a smooth fall-off in amplitude due to attenuation, diffraction and/or refraction if the sensing fiber 2 is unfirmly embedded in a smooth medium 3. Any jumps provide information on a local contact that the fiber has with its surroundings 3. Such information can be used to improve measurements. As an example, if there is a worse coupling in a particular location e.g. the beginning or ending of the sensing fiber 2, one can adjust DAS settings to compensate for that.

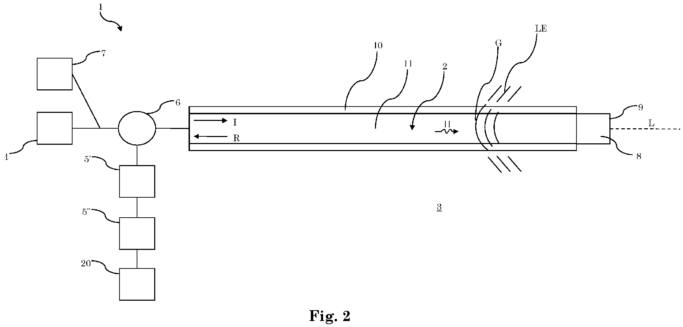

Figure 2 shows a schematic view of an acoustic sensing system 1 according to a second embodiment of the invention. Here, the cladding 10 of the sensing fiber 2, being a multimode fiber optic, is relatively large allowing a large energy leakage of the guided acoustic wave G due to mode conversion and refraction. Further, the sensing fiber 2 may have a single core 11 or multiple cores.

The interrogator module 4 may be arranged for operating at a first wavelength or frequency, while the high power optical pulse source 7 may be arranged for operating at a second wavelength or frequency, different from the first wavelength. Then, the absorber structure 8 may be formed such that it converts optical power into thermal energy when impinged with light of the second wavelength, and does not or only hardly generate thermal energy when impinged with light of the first wavelength.

It is noted that the interrogator module 4 may operate at a multiple number of interrogating wavelengths or frequencies.

Further, the high power optical pulse source 7 may be arranged to operate at a multiple number of wavelengths or frequencies, e.g. for selectively generating acoustic waves at respective absorber structures 8 that are arranged for converting optical power of respective wavelengths into heat. Absorber structures 8 with different frequency sensibility can be applied. Also, a particular absorber structure 8 may be adapted for heat conversion of high power optical pulses H of various optical properties e.g. wavelengths, pulse shapes. Then, a first high power optical pulse H at first wavelength or pulse shape may be transmitted to the absorber structure 8 for generating a first guided acoustic wave G having a first frequency, and a second high power optical pulse H at second wavelength or pulse shape may be transmitted to said absorber structure 8 for generating a second guided acoustic wave G having a second frequency. The first and second guided acoustic waves G may have differences in acoustic resolution and penetration depth, i.e. a high frequency acoustic pulse could be generated for detailed inspection and limited range, while a low frequency acoustic pulse could be generated for coarser inspection and larger range.

Figure 3 shows a schematic view of an acoustic sensing system 1 according to a third embodiment of the invention. Here, the sensing fiber 2 is provided with a first absorber structure 8' and a second absorber structure 8", at different locations, e.g. at a distal end 9 or an intermediate section. The absorber structures 8', 8" each include a tilted FBG 18 for partially diverting light to travel outside the sensing fiber 2, e.g. in the cladding 10 or environment 3. Also other structures for partially diverting the light can be used. In principle, each tilted FBG 18 creates acoustic waves travelling in opposite directions along the sensing fiber 2. The absorbing structures 8 can be tweaked to mainly absorb optical pulses at a specific wavelength or at a multiple number of wavelengths that may be overlapping or mutually different. Then, multiple acoustic waves can be generated simultaneously using a single high power optical pulse H without adversely affecting operation of the interrogator module 4 and the detection module 5', 5", or individual acoustic waves can selectively be generated. Generally, a single or a multiple number of tilted FBGs can be applied.

In an alternative embodiment, the absorber structure 8 includes a sensing fiber 2 wherein a cladding 10 is locally removed, and a PA coating is directly applied to the core 11 of the sensing fiber 2. Further, the cladding and eventually the core may be completely or partially removed at one side of a sensing fiber section. Further, two optic fibers can be spliced with a lateral offset forming a staggered sensing fiber 2.

Generally, it might be advantageous to design the location of the absorbing structures 8 such that acoustic waves have to travel a minimum distance allowing for more sensitive measurement, i.e. higher frequencies, shorter wavelengths, larger typical attenuation of the acoustic waves.

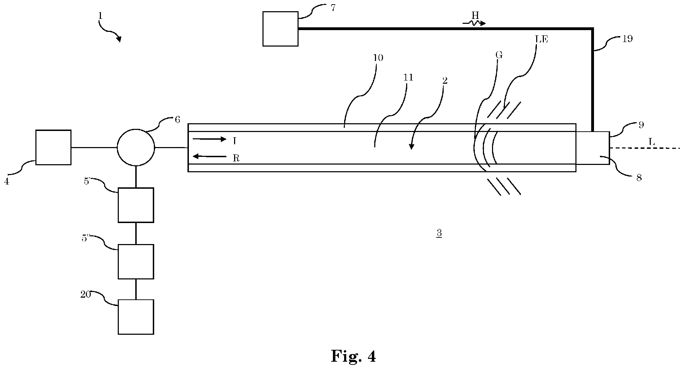

Figure 4 shows a schematic view of an acoustic sensing system 1 according to a fourth embodiment of the invention. Here, the system includes a separate or excitation fiber 19 guiding a high power optical pulse H generated by the high power optical pulse source 7 towards the absorber structure 8. In principle, multiple separate or excitation fibers can be applied for guiding a high power optical pulse H towards respective absorber structures 8. Further, the high power optical pulse source 7 may include a single or a multiple number of laser or diode sources for generating respective high power optical pulses.

As shown in Figs. 1-4, the system 1 further includes a processor 20 for deducing, based on the guided or interface acoustic wave response detected by the detection module 5', 5" via the reflected light R, an environmental spatial dependent material parameter, such as a local stiffness and/or a local Young's modulus, interacted with the guided or interface acoustic wave propagation.

During propagation of the guided or interface acoustic wave interaction occurs with local environmental spatially dependent material parameters, such as stiffness and mass density. These parameters are deduced, by the processor 20, from characteristics of the acoustic wave that have been measured by the detection module 5', 5" such as wave speed and attenuation, then retrieving information of the mechanical coupling between the environment 3 and the sensing fiber 2.

The combination of distribution fiber optic sensing or quasi distribution fiber optic sensing with guided wave propagation model provides information about local mechanical interaction or coupling between the sensing fiber 2 and the surrounding material 3.

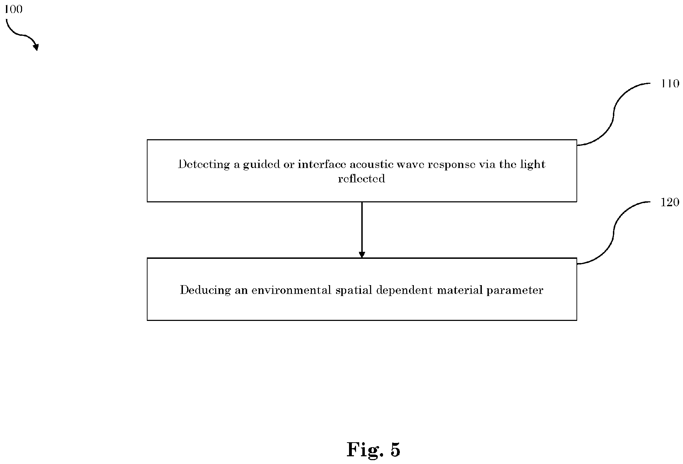

Figure 5 shows a flow chart of a method 100 according to the invention. The method 100 is applied for using an acoustic sensing system as described above. The method 100 comprises a step of detecting 110 a guided or interface acoustic wave response via the light reflected, and a step of deducing 120, based on the detected guided or interface acoustic wave response, an environmental spatial dependent material parameter, such as a local stiffness and/or a local Young's modulus, interacted with the guided or interface acoustic wave propagation.

The step of detecting the guided or interface acoustic wave response may include measuring properties of the guided or interface acoustic wave via the light reflected, such as wave speed and/or wave attenuation.

The method may further comprise a step of evaluating a guided or interface wave model to calculate a simulated response of the guided or interface acoustic wave, based on an estimated environmental spatial dependent material parameter, and a step of calibrating the detected response by interrelating the environmental spatial dependent material parameter deduced from the detected response to the estimated environmental spatial dependent material parameter of the guided or interface wave model, thereby providing an autocalibration of the acoustic sensing system.

In addition, the method may comprise a step of determining a change in the environmental spatial dependent material parameter value by repeatedly performing the steps of injecting a high power optical pulse, detecting the guided or interface acoustic wave response, deducing an environmental local dependent material parameter, based on the detected response, and by comparing the deduced environmental spatial dependent material parameter over time, thereby logging and comparing data related to the mechanical interaction at each location at different time instants. A change such as a bias in mechanical interaction at each location can be measured. Such changes are related e.g. to a change of mechanical properties of material around the sensing fiber, such as Young's modulus or stiffness.

The method for using an acoustic sensing system can also at least partially be performed using a computer program comprising instructions for causing a processor to perform at least one step of the method according to the invention. All (sub)steps can in principle be performed on a single processor. However, it is noted that at least one (sub)step can be performed on a separate processor. A processor can be loaded with a specific software module. In further embodiments, there may be a multiple number of processors, wherein each of the processors may be arranged to perform a substep or substeps. It is noted that a distributed processor may be used.

The above described fiber interferometer measurement system can advantageously be used in non-destructive ultrasonic testing, such as for example for the detection of any delamination, damage, stiffness changes and/or rust in large structures such as bridges, industrial structures or offshore structures. Specifically, the fiber interferometer measurement system can advantageously be applied for receiving guided acoustic or elastic waves in non-destructive ultrasonic testing.

It is noted that, in principle, the above described fiber interferometer measurement system can also be in other fields, e.g. in geophysical or marine exploration, or in the medical field, or in monitoring system for process industry e.g. for temperature distribution sensing using the absolute FBG wavelength measurement.

Various variations are possible. It will be clear to the skilled person that the invention is not limited to the exemplary embodiment represented here. Many variations are possible.

Such variants will be apparent for the person skilled in the art and are considered to fall within the scope of the invention as defined in the following claims.

## Claims

1. An acoustic sensing system, comprising
- a sensing fiber located in an environment;
- an interrogator module connected to the sensing fiber for interrogating the sensing fiber using an incident light;
- a detection module connected to the sensing fiber for detecting light reflected by the sensing fiber illuminated by the incident light,
the system further comprising
- a high power optical pulse light source connected to the sensing fiber for injecting a high power optical pulse therein,
wherein the sensing fiber is provided with an absorber structure comprising material converting optical power from the high power optical pulse into a thermal expansion of the absorber structure resulting in a guided or interface acoustic wave propagating along the sensing fiber towards the detection module, and wherein the detection module is arranged for detecting light reflected by the sensing fiber affected by the guided or interface acoustic wave as a response to the high power optical pulse.

2. An acoustic sensing system according to claim 1, wherein the absorber structure is provided at a distal end and/or at an intermediate section of the sensing fiber.

3. An acoustic sensing system according to claim 1 or 2, wherein the interrogator module is arranged for operating at a first wavelength, while the high power optical pulse source is arranged for operating at a second wavelength different from the first wavelength.

4. An acoustic sensing system according to any of the preceding claims, wherein the high power optical pulse source is arranged for operating at a multiple number of wavelengths and/or pulse shapes.

5. An acoustic sensing system according to any of the preceding claims, wherein the sensing fiber is provided with a multiple number of absorber structures sensitive to a single or a multiple number of wavelengths of the high power optical pulse injected by the high power optical pulse light source that are mutually different or overlapping.

6. An acoustic sensing system according to any of the preceding claims, wherein an absorber structure is provided with a single or a multiple number of tilted FBGs with respect to a longitudinal axis of the sensing fiber.

7. An acoustic sensing system according to any of the preceding claims, wherein the absorber structure is at least partly formed by a cladding of the sensing fiber, by the environment where the sensing fiber is located and/or by a local core offset of the sensing fiber.

8. An acoustic sensing system according to any of the preceding claims, further comprising a separate fiber guiding a high power optical pulse generated by the high power optical pulse source towards the absorber structure.

9. An acoustic sensing system according to claim 8, wherein the sensing fiber and the separate fiber are embedded in a common cladding, or wherein the sensing fiber and the separate fiber each have their own cladding.

10. An acoustic sensing system according to any of the preceding claims, comprising a processor arranged for deducing, based on the guided or interface acoustic wave response detected by the detection module via the reflected light, an environmental spatial dependent material parameter, such as a local stiffness and/or a local Young's modulus, interacted with the guided or interface acoustic wave propagation.

11. An acoustic sensing system according to any of the preceding claims, implemented as a distributed acoustic sensing system, wherein the detection module is arranged for detecting properties of Rayleigh type backscattered light caused by a scattering section in the sensing fiber.

12. A method of using an acoustic sensing system according to any of the preceding claims, comprising a step of detecting a guided or interface acoustic wave response via the light reflected, and a step of deducing, based on the detected guided or interface acoustic wave response, an environmental spatial dependent material parameter, such as a local stiffness and/or a local Young's modulus, interacted with the guided or interface acoustic wave propagation.

13. A method according to claim 12, wherein the step of detecting the guided or interface acoustic wave response includes measuring properties of the guided or interface acoustic wave via the light reflected.

14. A method according to claim 12 or 13, further comprising a step of evaluating a guided or interface wave model to calculate a simulated response of the guided or interface acoustic wave, based on an estimated environmental spatial dependent material parameter, and a step of calibrating the detected response by interrelating the environmental spatial dependent material parameter deduced from the detected response to the estimated environmental spatial dependent material parameter of the guided or interface wave model.

15. A method according to any of the preceding claims 12-14, further comprising a step of determining a change in the environmental spatial dependent material parameter value by repeatedly performing the steps of injecting a high power optical pulse, detecting the guided or interface acoustic wave response, deducing an environmental local dependent material parameter, based on the detected response, and by comparing the deduced environmental spatial dependent material parameter over time.

16. A computer program product for acoustic sensing, the computer program product comprising computer readable code causing a processor to perform a method of operating an acoustic sensing system according to any of the preceding claims 1-11, the method comprising a step of deducing, based on the guided or interface acoustic wave response detected by the detection module, an environmental spatial dependent material parameter, such as a local stiffness and/or a local Young's modulus, interacted with the guided or interface acoustic wave propagation.
